# EUROPÄISCHE PATENTANMELDUNG

(11) **EP 0 718 303 A1**
(43) Veröffentlichungstag der Anmeldung: **26.06.1996**
(21) Anmeldenummer: 94120380.4
(22) Anmeldetag: 22.12.1994
(51) Int. Cl.: C07F 17/00, C07F 17/02

(54) **Verfahren zur Herstellung von Übergangsmetallkomplexen mit disubstituierten Cyclopentadienyl-Liganden**

(71) Anmelder: Witco GmbH, D-59192 Bergkamen (DE)
(72) Erfinder: Lisowsky, Richard, Dr., D-59174 Kamen (DE)

(57) **Zusammenfassung**

Die Erfindung betrifft ein Verfahren zur Herstellung von Übergangsmetallkomplexen mit disubstituierten Cyclopentadienyl-Liganden der allgemeinen Formel 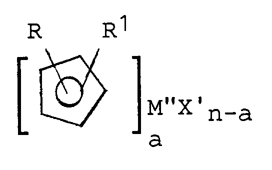
bei dem man monomeres monosubstituiertes Cyclopentadien unter Einsatz einer Mischung aus einem Alkalioxid oder -hydroxid und einem Erdalkalioxid oder -hydroxid als Metallierungsmittel in Polyoxyalkylenpolyethern als Reaktionsmedium mit Organohalogeniden oder -pseudohalogeniden zum intermediär entstehenden disubstituierten Cyclopentadien umsetzt, welches in situ metalliert und mit einem Übergangsmetallhalogenid zum Endprodukt umgesetzt wird.

## Beschreibung

Die Erfindung betrifft ein verfahren, das, ausgehend von monosubstituierten Cyclopentadienen (RCp), in hohen Ausbeuten ohne Isolierung der Zwischenstufen die Herstellung von Übergangsmetallkomplexen, die disubstituierte Cyclopentadienyl-Liganden tragen, auch in technischem Maßstab gestattet.

Aufgrund der vielfältigen Anwendungsmöglichkeiten obengenannter Übergangsmetallkomplexe als Katalysatoren in der organischen Synthese sowie insbesondere in der Polymerisation von Olefinen ist die effiziente technische Herstellbarkeit von an den Cyclopentadienylresten disubstituierten Sandwichkomplexen in zunehmendem Maße wichtig geworden.

Die Synthese solcher Verbindungen ist im Prinzip bekannt. Sie erfolgt nach den Reaktionsgleichungen I und II: 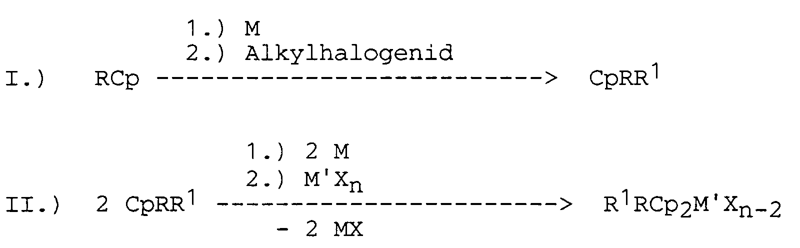
mit:
- M =: Metallierungsmittel (z. B. Na, K, Lithiumalkyl)
- M' =: Übergangsmetall (z. B. Fe, Ti, Zr, Hf)
- X =: Cl, Br, I
- R, R¹ =: gleich oder verschieden Alkyl-, Cycloalkyl-, Benzyl-, Vinyl-, Allyl-Reste
- n =: 2 - 4.

Nachteilig dabei ist, daß das disubstituierte Cyclopentadien (CpRR¹) separat hergestellt werden muß, bevor es weiter umgesetzt werden kann.

Die Ausbeuten an CpRR¹ in Stufe I. sind oftmals nur gering, so daß Nebenprodukte aufwendig entfernt werden müssen, bevor entsprechend reines Produkt für eine weitere Umsetzung erhalten werden kann.

Die Eigenschaft der Dialkylcyclopentadienylverbindungen, Dimere durch intermolekulare Diels-Alder-Reaktion zu bilden, macht die Reinigung kompliziert, da nur durch mehrfache Destillation und thermische Retro-Diels-Alder-Reaktion das Monomere CpRR¹ rein erhalten werden kann. Jedoch sind nur diese Monomeren für die Reaktion nach Gleichung II einsetzbar. Sie sind wegen oben genannter Neigung zur Dimerbildung nicht lagerstabil und müssen vor Einsatz nochmals aufwendig thermisch entdimerisiert werden. (Houben-Weyl-Band 5/1c - Methoden der Organischen Chemie, Eugen Müller Verlag (Herausgeber) - Vierte Auflage (1970) - S.662 ff ; Georg Thieme Verlag, Stuttgart; - Metallocene: "Chemistry Of Organo-Zirconium And -Hafnium Compounds", D. J. Cardin; M. F. Lappert; C. L. Raston; 1986, Ellis Horwood Limited).

Zwar gelang es in einzelnen Fällen, die Ausbeuten nach Gleichung I an disubstituierten Cyclopentadien-Derivaten zu verbessern, aber die Verbindungen fallen entweder noch nicht rein genug für die Umsetzung nach Gleichung II oder in einem Lösungsmittel an, das für eine Umsetzung nach Gleichung II nicht geeignet ist und somit vorher entfernt werden muß, was zu Ausbeuteverlusten und der oben angeführten Problematik der Dimerisierung führt.

Von besonderem wirtschaftlichen und technischem Interesse ist daher ein Verfahren, welches die genannten Nachteile vermeidet und in einfacher Reaktionsführung die Herstellung von an den Cyclopentadienringen disubstituierten Metallocenen mit verbesserten Ausbeuten auch in kommerziellem Maßstab ermöglicht.

Überraschenderweise wurde nun gefunden, daß die obengenannten Reaktionen von monosubstituierten Cyclopentadienen (RCp) mit Organohalogeniden in hohen Ausbeuten und hoher Reinheit (≧95 %) entsprechend disubstituierte Cyclopentadiene (CpRR¹) liefern, die weiterhin vorzugsweise ohne Isolierung - und damit ohne Dimerisation - direkt umgesetzt in hohen Ausbeuten und hoher Reinheit zu entsprechenden Metallocenen führen.

Dies war umso überraschender, als daß früher gefunden wurde, daß bei der Umsetzung von Cyclopentadien mit Alkylhalogeniden unter gleichen Bedingungen keinerlei Bildung einer disubstituierten Verbindung zu beobachten war (DE-A-43 12 270).

Die Erfindung betrifft somit ein Verfahren zur Herstellung von Übergangskomplexen mit disubstituierten Cyclopentadienyl-Liganden der allgemeinen Formel 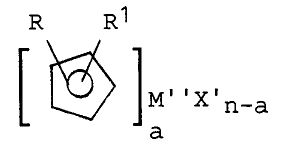
worin bedeuten:
- R, R¹:: gleich oder verschieden eine C₁₋C₃₀₋Alkylgruppe, C₂₋C₃₀-Alkenylgruppe, C₇-C₃₀-Alkylarylgruppe, C₈-C₃₀₋Alkenylarylgruppe, C₃-C₁₂-Alkoxyalkylgruppe, C₁-C₃₀-Fluoralkylgruppe oder ein Organoelementrest wie C₁-C₆-Alkyl-tri(C₁-C₁₀-alkyl)silyl
- M'' :: Übergangsmetall, wie Fe, V, Cr, Sc, insbesondere Ti, Zr, Hf
- X' :: Cl, Br, I
- n :: Oxidationszahl des Übergangsmetalls
- a :: ≦ n = Anzahl der zu substituierenden Gruppen X' am Übergangsmetall,
wobei in erster Stufe monomeres monosubstituiertes Cyclopentadien unter Einsatz von Metallierungsmitteln und Organohalogeniden zu disubstituierten Cyclopentadienen umgesetzt, isoliert und in einer weiteren Stufe metalliert und mit einem Übergangsmetallhalogenid zum Endprodukt umgesetzt wird, welches dadurch gekennzeichnet ist, daß man monomeres monosubstituiertes Cyclopentadien unter Einsatz einer Mischung aus einem Alkalioxid und/oder Alkalihydroxid und einem Erdalkalioxid und/oder Erdalkalihydroxid als Metallierungsmittel in Poly-oxyalkylenpolyethern als Reaktionsmedium mit Organohalogeniden zum intermediär entstehenden disubstituierten Cyclopentadien umsetzt, welches direkt in situ metalliert und mit einem Übergangsmetallhalogenid zum Endprodukt umgesetzt wird.

Weitere Gegenstände der Erfindung sind durch die Ansprüche gekennzeichnet.

Bevorzugt als Substituent R, R¹ sind gegebenenfalls verzweigte C₁-C₁₈-Alkylgruppen, gegebenenfalls verzweigte C₂-C₁₈-Alkenylgruppen, C₃-C₆-Alkoxyalkylgruppen, C₁-C₃-Alkyl-C₁-C₆-trialkylsilylgruppen, insbesondere C₃-C₈-Alkylgruppen, C₂-C₆-Alkenylgruppen.

Als Übergangsmetall werden insbesondere Titan, Zirkonium oder Hafnium eingesetzt.

Anhand des folgenden Reaktionsschemas wird das erfindungsgemäße Verfahren nachstehend erläutert (III.): 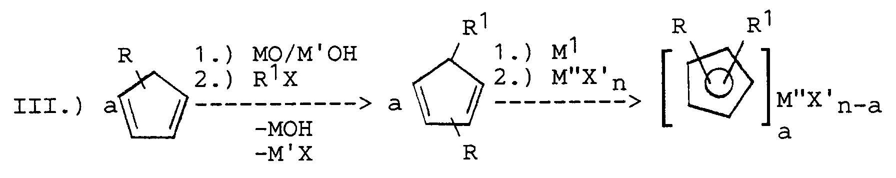
Dabei bedeuten:
- M :: Alkali- oder Erdalkalimetall
- M' :: Alkali- oder Erdalkalimetall
- R, R¹:: gleich oder verschieden eine C₁₋C₃₀₋Alkylgruppe, C₂-C₃₀-Alkenylgruppe, C₇-C₃₀-Alkylarylgruppe, C₈₋C₃₀₋ Alkenylarylgruppe, C₃-C₁₂-Alkoxyalkylgruppe, C₁-C₃₀-Fluoralkylgruppe oder ein Organoelementrest wie C₁-C₆-Alkyl-tri(C₁-C₁₀-alkyl)silyl
- X :: Halogen wie Cl, Br, I oder -OSO₂R' (R': Alkyl, p-Tolyl)
- M¹ :: Metallierungsmittel (Li, Na, K, NaH, KH, Li-Alkyle
- M'': Übergangsmetall, wie Fe, V, Cr, Sc, insbesondere Ti, Zr, Hf
- X' :: Cl, Br, I
- n :: Oxidationszahl des Übergangsmetalls
- a :: ≦ n = Anzahl der zu substituierenden Gruppen X' am Übergangsmetall.

Die Mischung eines Metalloxids und eines Metallhydroxids wird in Glykoldiethern suspendiert. Dabei sind prinzipiell alle Kombinationen an Alkali- und Erdalkalioxiden und -hydroxiden denkbar.

Besonders bewährt haben sich Mischungen aus CaO und NaOH, sowie von MgO und NaOH im Molverhältnis 1 : 1, wobei als weiteres geeignetes Metalloxid BaO zu nennen ist. In Bezug auf eingesetztes CpR muß mindestens pro Mol CpR je ein Mol Metalloxid/-hydroxid eingesetzt werden. Erfindungsgemäß bevorzugt werden CpR : MO : MOH = 1 : 1 : 1 bis 1 : 3 : 3, insbesondere 1 : 1,5 : 1,5 bis 1 : 2,5 : 2,5.

Besonders geeignet sind Poly(oxyalkylen)glykolether, insbesondere solche der Formel R¹-O-(CH₂CH₂-O)ₙ-R², wobei R¹, R² unabhängig voneinander eine Alkyl- oder Arylgruppe und n = 1 - 12 sind. Die eingesetzten Mengen sind unkritisch, wobei als untere Grenze Mengen anzusehen sind, bei denen die Reaktionsmischung noch rührfähig ist.

Bei Metallierung mit Natrium sind Glykoldiether mit R¹ = R² = Ethyl, n = 2; R¹ = R² = Methyl, n = 2; R¹ = R² = Methyl, n = 3 besonders geeignet.

Für den Fall, daß mit Li-Alkylen metalliert wird, sind noch zusätzlich Glykoldiether mit R¹ = R² = Methyl, n = 1; R¹ = R² = Ethyl, n = 1 besonders geeignet.

Nacheinander werden dann monomeres monosubstituiertes Cyclopentadien und zu substituierender Rest R¹ in der Form R¹X zudosiert.

Erfindungsgemäß bevorzugt sind equimolare Mengen an CpR und R¹X, wobei gegebenenfalls zur Beschleunigung der Umsetzung das jeweils niedriger siedende Produkt im Überschuß von 10 - 50 Mol-% eingesetzt werden kann.

Nach erfolgter Reaktion werden die anfallenden schwerlöslichen Salze abgetrennt sowie - sofern nötig - leichtflüchtige, überschüssige Edukte entfernt.

Die organische Phase kann anschließend ohne Isolierung des Reaktionsprodukts weiter eingesetzt werden, wobei nach in der Literatur bekannten Methoden die Metallierung des disubstituierten Cyclopentadiens erfolgt ("Chemistry Of Organo-Zirconium And -Hafnium Compounds", D. J. Cardin; M. F. Lappert; C. L. Raston; 1986, Ellis Horwood Limited).

Vor der Metallierung können die disubstituierten Cyclopentadiene (CpRR 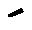 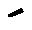 ) aus der Reaktionsmischung aber auch gegebenenfalls isoliert werden.

Besonders geeignet zur Metallierung sind z. B. Natrium, Natriumhydrid und Lithiumalkyle. Unmittelbar daran schließt sich die Zugabe des Übergangsmetallhalogenids an.

Nach Abtrennung der anfallenden anorganischen Salze wird das gewünschte Metallocen isoliert und gegebenenfalls mittels Umkristallisation weiter gereinigt.

Die Rohstoffe CaO und NaOH sind preiswert verfügbar und im Vergleich zu anderen Metallierungsmitteln wie Natrium oder Lithiumalkylen gefahrloser handhabbar.

Bei der erfindungsgemäßen Umsetzung von monosubstituierten Cyclopentadienen mit Alkylhalogeniden wird keinerlei Überalkylierung beobachtet, wie es z. B. bei dem Einsatz von elementarem Natrium oder Li-Alkylen als Metallierungsmittel der Fall ist (siehe Vergleichsbeispiele).

Es wird als Alkylierungsprodukt ausschließlich das disubstituierte Cyclopentadien-Derivat gebildet, wobei bei sterisch nicht zu anspruchsvollen Resten R, R¹ (z. B. linearen Alkylgruppen) dieses Verfahren ein charakteristisches Isomerengemisch von ca. 3 : 1 - 4 : 1 an 1,2- und 1,3-substituierten z. B. Dialkylcyclopentadienen liefert, was für den Einsatz als Katalysatorkomponente zur Polymerisation von Olefinen vorteilhaft sein kann.

Die Anwendung der erfindungsgemäß mitverwendeten Ether ermöglicht sowohl die Entfernung von eventuell noch vorhandenen Spuren an leichtsiedenden Einsatzstoffen nach der Umsetzung gemäß Gleichung I und vor der Umsetzung gemäß Gleichung II, was die Reinheit des Endproduktes weiter erhöhen kann, als auch die direkte weitere Metallierung und Umsetzung mit einer entsprechenden Übergangsmetallverbindung zum gewünschten Metallocen.

Falls gewünscht, kann aus der Reaktionsmischung das im Überschuß vorhandene 1,2-RR¹Cp- bzw. das 1,3-RR¹Cp-Metallocen durch beispielsweise Umkristallisation gewonnen werden. Bei sterisch wenig anspruchsvollen Alkylresten wie z. B. linearen Alkylgruppen fallen die 1,2-RR¹Cp-Metallocene im Überschuß an.

### Beispiele

### Beispiel 1

### Darstellung von Bis(1,2/1,3-Methyl-i-Propylcyclopentadienyl)zirkondichlorid

10.1 g CaO und 7.2 g NaOH, jeweils fein gepulvert, wurden in 60 ml Dimethoxyethan bei Raumtemperatur vorgelegt und mit 9.62 g (0.12 mol) frisch entdimerisiertem Methylcyclopentadien versetzt.

7.38 g (0.06 mol) i-Propylbromid wurden innerhalb von 1 h zudosiert, wobei die Temperatur unter 30 °C gehalten wurde.

Es wurde über Nacht weitergerührt und anschließend die Reaktionsmischung mittels Gaschromatographie untersucht.

Nachdem i-Propylbromid vollständig umgesetzt war, wurden die anorganischen Salze abfiltriert und das Filtrat fraktioniert destilliert.

Die erhaltene Fraktion an 1,2/1,3-Methyl-i-propylcyclopentadien (6.23 g; 0.051 mol) wurde in Dimethoxyethan vorgelegt, bei Raumtemperatur mit 20.4 ml Butyllithium (2.5 molar in Hexan; 0.051 mol) versetzt, 1 h refluxiert und dann bei 0 °C mit 5.94 g (0.0255 mol) ZrCl₄ versetzt und 1 h bei Raumtemperatur gerührt.

Das ausgefallene LiCl wurde abgetrennt, das Lösungsmittel vom Filtrat abgezogen und der Rückstand aus Pentan umkristallisiert.

Man erhielt 7.26 g Ausbeute (70.4 %) einer Isomerenmischung an Bis(1,2/1,3-Methyl-i-Propylcyclopentadienyl)zirkondichlorid.
Zr: (ber.: 22.55) gef.: 22.40
Cl: (ber.: 17.5 ) gef.: 17.35
¹H-NMR: (in CDCl₃)
6.3 - 5.8 (m, 6 H, Cp-Ring); 3.1 - 2.95 (m, 2 H, H-C); 2.1 - 2.3 (m, 6 H, H₃C); 1.3 - 0.99 (m, 12 H, H₃C)

### Beispiel 2

### Darstellung von Bis(1,2/1,3-Methyl-Cyclopentylcyclopentadienyl)zirkondichlorid

10.1 g CaO und 7.2 NaOH, jeweils fein gepulvert, wurden in 65 ml Diethylenglykoldiethylether bei Raumtemperatur vorgelegt und mit 9.62 g (0.12 mol) frisch entdimerisiertem Methylcyclopentadien versetzt. 8.94 g (0.06 mol) Cyclopentylbromid wurden innerhalb von 1 h zudosiert, wobei die Temperatur unter 30 °C gehalten wurde.

Nach 8 h Rühren bei Raumtemperatur wurde überschüssiges MeCp durch Anlegen von Vakuum entfernt. Die Gaschromatographie-Kontrolle zeigte keinerlei Überalkylierung, sondern nur die Bildung des 1,2/1,3-Methyl-Cyclopentylcyclopentadien.

Die Reaktionsmischung wurde bei Raumtemperatur mit 22 ml Butyllithium (2.5 molar in Hexan, 0.055 mol) versetzt und 1 h refluxiert. Nach Abkühlung auf 0 °C wurden 6.4 g ZrCl₄ (0.0275 mol) eingetragen und 1 h bei Raumtemperatur nachgerührt.

Es wurde zur Trockne im Vakuum eingeengt, der Rückstand mit Heptan ausgekocht und heiß filtriert. Nach Abkühlen auf -20 °C konnte das auskristallisierte Produkt mittels Filtration isoliert und getrocknet werden.

Man erhielt 8.4 g (67 % Ausbeute.)
Zr. (ber.: 19.98) gef.: 19.70
Cl: (ber.: 15.53) gef.: 15.34
¹H-NMR (CDCl₃):
6.35 - 5.3 mp (m, 6 H, Cp): 3.1 - 2.95 (m, 2 H, -CH-); 2.3 - 2.1 (m, 6 H, -CH₃); 2.1 - 1.1 (m, 16 H, -CH₂)

### Beispiel 3

### Darstellung von Bis(1,2/1,3-Methyl-Octylcyclopentadienyl)zirkondichlorid

Die Umsetzung wurde analog zu Beispiel 2 durchgeführt, jedoch anstelle des Cyclopentylbromids wurden 11.58 g Octylbromid eingesetzt.

Es konnten 9.1 g Bis(1,2/1,3-Methyl-Octylcyclopentadienyl)zirkondichlorid (Ausbeute 61 %) isoliert werden.
Zr: (ber.: 16.74) gef.: 16.45
Cl: (ber.: 13.02) gef.: 12.89
¹H-NMR (CDCl₃): Isomerengemisch
6.2 - 5.9 (m, Cp); 2.5 - 2.4 (m, 4 H, -CH₂); [2.2 (s,-CH₃, Isomer mit 1.3-Substitution am Cp); 2.1 (s, -CH₃, Isomer mit 1,2-Substitution am Cp), insgesamt: 6 H; Verhältnis 3 : 1 von 1,2 : 1,3 substituiert]
1.6 - 1.2 (m, -(CH₂)₆)-); 0.9 - 0.8 (dt, -CH₃)

### Beispiel 4

### Darstellung von Bis(1,2/1,3-Benzyl-Methylcyclopentadienyl)zirkondichlorid

Es wurde analog zu Beispiel 2 verfahren, jedoch anstelle von Cyclopentylbromid wurden 7.6 g Benzylchlorid eingesetzt.

Es konnten 7.98 g Produkt (Ausbeute 58 %) isoliert werden.
Zr: (ber.: 18.2) gef.: 18.32
Cl: (ber.: 14.2) gef.: 14.28
¹H-NMR (CDCl₃):
7.3 - 7.05 (m, 10 H, Aromaten CH (Benzyl)); 6.2 - 5.7 (m, 6 H, Cp);
4.0 - 3.9 (m, 4 H, -CH₂-); 2.2 - 2.05 (m, 6 H, -CH₃)

### Beispiel 5

### Darstellung von Bis(1,2/1,3-Di-n-Butylcyclopentadienyl)zirkondichlorid

Es wurden 48 g NaOH und 67.3 g CaO, jeweils fein gepulvert, in 600 ml Diethylenglykoldiethylether vorgelegt und bei Raumtemperatur mit 59.5 g (0.9 mol) frisch entdimerisiertem Cyclopentadien versetzt. Dann wurden bei 0 °C bis 20 °C 82.2 g (0.6 mol) n-Butylbromid zudosiert. Nach Zugabe wurde noch 4 h bei Raumtemperatur nachgerührt. Dann erfolgte die Filtration der Reaktionsmischung, und das Filtrat wurde durch Anlegen von Vakuum von überschüssigem Cyclopentadien befreit.

Nachdem 60 g NaOH und 84.1 g CaO in die Reaktionsmischung eingetragen wurden, wurden bei Raumtemperatur 68.5 g (0.5 mol) n-Butylbromid zudosiert. Anschließend wurde 8 h unter Rührung nachreagieren gelassen. Durch Anlegen von Vakuum wurden Reste an nicht umgesetzten n-Butylcyclopentadien abgezogen.

Die Reaktionsmischung wurde weiter mit 200 ml Butyllithium (2.5 molar in Hexan; 0.5 mol) bei Raumtemperatur versetzt. Nach Zugabe wurde ½ h refluxiert und anschließend auf 0 °C abgekühlt. Es wurden bei 0 °C 58.3 g (0.25 mol) Zirkontetrachlorid in die Reaktionsmischung eingetragen.

Nach 1 h Reaktionszeit wurde das Lösungsmittel im Vakuum abgezogen und der Rückstand in Heptan aufgenommen und filtriert. Das Filtrat wurde auf -30 °C abgekühlt und der ausgefallene Feststoff abfiltriert und getrocknet.

Man erhielt 89 g (Ausbeute: 69 % der Theorie, bezogen auf eingesetztes ZrCl₄) Produkt.
Zr: (ber.: 17.65) gef. 17.60
Cl: (ber.: 13.72) gef. 13.65
¹H-NMR (CDCl₃): Isomerengemisch
6.2 - 5.9 (m, 6 H, Cp); 2.7 - 2.4 (m, 4 H, -CH₂-): 1.6 - 1.2 (m, 8 H, -CH₂CH₂-);
1.0 - 0.8 (m, 6 H, -CH₃)

### Beispiel 6

### Darstellung von Bis(1,2/1,3-Methyl-Butylcyclopentadienyl)zirkondichlorid

Bei 10 °C wurden 17.14 g (214 mmol) monomeres Methylcyclopentadien zu einer Mischung aus 150 ml Diethylglykoldiethylether und 27.5 g CaO/NaOH - gepulvert - getropft. Sofort anschließend erfolgte die Zudosierung von 19.6 g (143 mmol) n-Butylbromid. Es wurde 8 h bei Raumtemperatur nachgerührt. Mittels leichtem Unterdruck wurde das überschüssige Methylcyclopentadien abgezogen und durch Filtration die anorganischen Salze abgetrennt. Gemäß Gaschromatographie betrugen die Ausbeuten an n-Butyl-Methylcyclopentadien 90 %.

Es konnte keinerlei Bildung von Di- oder Tributylmethylcyclopentadien nachgewiesen werden.

Das klare Filtrat wurde ohne weitere Behandlung eingesetzt, wobei das n-Butyl-Methylcyclopentadien durch Zugabe von n-Butyllithium (90 %ig in Hexan; 114 mmol) metalliert und anschließend mit ZrCl₄ (57 mml; 13.3 g) umgesetzt wurde.

Nach beendeter Reaktion wurden alle flüchtigen Bestandteile abgezogen und der Rückstand mit Hexan versetzt, zur Abtrennung der anorganischen Salze filtriert und das Filtrat weitestgehend eingeengt. Durch Kühlen auf -20 °C wurde das Produkt zur Kristallisation gebracht und anschließend durch Filtration isoliert.

Man erhielt nach Trocknung im Vakuum 15.5 g (63 % der Theorie) Produkt, das gemäß ¹H-NMR 1.2- und 1,3-n-Butyl-methylcyclopentadiengruppen in einem Verhältnis von ca. 3 : 1 enthielt.
¹H-NMR-Spektrum (CDCl₃):
6.3 - 5.93 (m, 6 H, -C₅H₃); 2.6 - 2.4 (m, 4 H, -CH₂), 2.2; 2.1 jeweils s, insgesamt: 6 H,
-CH₃-Gruppen von 1.2- und 1,3-substituierte Cyclopentadienylgruppen;
Verhältnis 3 : 1 von 1,2 : 1,3 substituiert; 1.6 - 1.3 (m, 8 H, -CH₂CH₂); 0.9 (t, 6 H, -CH₃)
Elementaranalyse: Zr: (ber.: 21.09) gef. 21.20; Cl: (ber.: 16.39) gef.: 16.24

### Beispiel 7

### Darstellung von Bis(1,2/1,3-n-Butylmethylcyclopentadienyl)-ZrCl₂ mit Isolieren des n-Butylmethylcyclopentadiens

Es wurde ein Gemisch aus 64.18 g CaO und 45.76 NaOH in 600 ml Dimethoxyethan vorgelegt. Bei Raumtemperatur wurden 91.66 g (1.44 mol) frisch entdimerisiertes Methylcyclopentadien zugegeben. Anschließend wurden 79.98 g n-Butylbromid (0.572 mol) innerhalb von 1 h bis zu einer Temperatur von max. 30 °C zugetropft.

Nach 4 h wurden alle ausgefallenen Salze mittels Filtration abgetrennt und nach Entfernen des Lösungsmittels das Filtrat fraktioniert destilliert.

Bei 30 - 45 °C/6 mbar erhielt man 58.5 g (0.429 mol; 75 % der Theorie, bezogen auf eingesetztes n-Butylbromid) an n-Butylmethylcyclopentadien.

50 g (0.367 mol) n-Butylmethylcyclopentadien wurden in einer Mischung aus 20 ml Tetrahydrofuran und 180 ml Hexan vorgelegt und mit 146.8 ml Butyllithium (2.5 molar in Hexan; 0.367 mol) tropfenweise bei Raumtemperatur versetzt. Es wurde noch 30 min nachgerührt und dann auf 0 °C abgekühlt. Man trug 42.8 g ZrCl₄ (0.184 mol) bei dieser Temperatur in die Lösung ein und rührte 1 h bei Raumtemperatur und 2 h unter Rückfluß nach. Die Reaktionslösung wurde von ausgefallenem LiCl befreit und zur Trockene eingeengt.

Der Rückstand wurde in 100 ml Pentan aufgenommen und bei -50 °C zur Kristallisation gebracht.

Es konnten 63.7 g (80 % der Theorie) Produkt isoliert werden.

¹H-NMR: identisch mit dem in Beispiel 1.

Elementaranalyse: Zr: (ber.: 21.09 %) gef.: 21.15; Cl: (ber.: 16.39 %) gef.: 16.30 %

### Beispiel 8

### Darstellung von Bis(1,2/1,3-Methylethylcyclopentadienyl)zirkondichlorid

Es wurden 45.76 g NaOH und 64.16 g CaO in 600 ml Dimethoxyethan vorgelegt und mit 91.66 g frisch entdimerisiertem Methylcyclopentadien versetzt. Unter den in Beispiel 7 angegebenen Bedingungen wurden dann 62.33 g Ethylbromid (0.572 mol) zugegeben und die Reaktion weitergeführt. Die abschließende fraktionierte Destillation zur Gewinnung des Ethylmethylcyclopentadiens lieferte bei 25 - 40 °C/150 mbar 42.2 g (0.39 mol; 68 % der Theorie, bezogen auf eingesetztes Ethylbromid).

40 g Ethylmethylcyclopentadien (0.37 mol) wurden in 100 ml Tetrahydrofuran und 100 ml Hexan vorgelegt, mit 148 ml Butyllithium metalliert (2.5 molar in Hexan; 0.37 mol) und mit 43.1 g ZrCl₄ (0.185 mol) unter denselben Reaktionsbedigungen wie in Beispiel 7 versetzt und aufgearbeitet.

Man erhielt 53.6 g (77 % der Theorie) Produkt.
Zr: (ber.: 24.23) gef.: 24.1
Cl: (ber.: 18.83) gef.: 18.7
¹H-NMR:
6.2 - 5.9 (m, 6 H, -C₅H₃); 2.6 - 2.4 (m, 4 H, -CH₂-); 2.2; 2.1 jeweils s, insgesamt: 6 H,
-CH₃-Gruppen von 1,2- und 1,3-substituierten Cyclopentadienylgruppen; Verhältnis von 1,2 : 1,3 substituierten Gruppen ca. 3 : 1; 1,2 - 1.05 (m (mehrere überlagerte Tripletts), insgesamt: 6 H, -CH₃)

### Vergleichsbeispiel

### Methylcyclopentadienylnatrium mit n-Butylbromid

- Einsatz:: 0.3 mol Natrium
0.2 mol Methylcyclopentadien - dimer
0.3 mol n-Butylbromid
Diethylenglykoldiethylether

Das Natrium wurde in 200 ml Diethylenglykoldiethylether vorgelegt und auf Rückfluß erhitzt, wobei das Natrium geschmolzen und fein dispergiert wurde.

Dann wurde das dimere Methylcyclopentadien innerhalb von 30 min zudosiert und solange nachreagieren gelassen, bis das Natrium vollständig abreagierte hatte.

Bei Raumtemperatur erfolgte dann die Zudosierung des Butylbromids innerhalb von 15 min, so daß die Temperatur nicht über 20 °C stieg.

Anschließend wurde eine Probe gezogen und mittels Gaschromatographie bzw. Gaschromatographie-Massenspektroskopie analysiert. Es wurden ca. 15 % mehrfachbutylierte Methylcyclopentadienylverbindungen gefunden.

## Patentansprüche

1. Verfahren zur Herstellung von Übergangskomplexen mit disubstituierten Cyclopentadienyl-Liganden der allgemeinen Formel 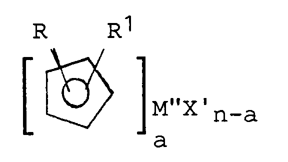 worin bedeuten:
R, R¹: gleich oder verschieden eine C₁₋C₃₀₋Alkylgruppe, C₂₋C₃₀-Alkenylgruppe, C₇-C₃₀-Alkylarylgruppe, C₈-C₃₀₋Alkenylarylgruppe, C₃-C₁₂-Alkoxyalkylgruppe, C₁-C₃₀-Fluoralkylgruppe oder ein Organoelementrest wie C₁₋C₆-Alkyl-tri(C₁-C₁₀-alkyl)silyl
M'' : Übergangsmetall, wie Fe, V, Cr, Sc, insbesondere Ti, Zr, Hf
X' : Cl, Br, I
n : Oxidationszahl des Übergangsmetalls
a : ≦ n = Anzahl der zu substituierenden Gruppen X' am Übergangsmetall,
wobei in erster Stufe monomeres monosubstituiertes Cyclopentadien unter Einsatz von Metallierungsmitteln und Organohalogeniden zu disubstituierten Cyclopentadienen umgesetzt, isoliert und in einer weiteren Stufe metalliert und mit einem Übergangsmetallhalogenid zum Endprodukt umgesetzt wird, dadurch gekennzeichnet, daß man monomeres monosubstituiertes Cyclopentadien unter Einsatz einer Mischung aus einem Alkalioxid und/oder Alkalihydroxid und einem Erdalkalioxid und/oder Erdalkalihydroxid als Metallierungsmittel in Polyoxyalkylenpolyethern als Reaktionsmedium mit Organohalogeniden zum intermediär entstehenden disubstituierten Cyclopentadien umsetzt, welches direkt in situ metalliert und mit einem Übergangsmetallhalogenid zum Endprodukt umgesetzt wird.

2. Verfahren gemäß Anspruch 1, dadurch gekennzeichnet, daß die Substituenten R, R¹ gleich oder verschieden C₃-C₁₈-Alkylgruppen, C₂-C₁₈-Alkenylgruppen, C₃-C₆-Alkoxyalkylgruppen oder C₁-C₃-AlkylC₁-C₆-trialkylsilylgruppen sein können.

3. Verfahren gemäß Anspruch 2, dadurch gekennzeichnet, daß R, R¹ gleich oder verschieden C₃-C₈-Alkylgruppen oder C₂-C₆-Alkenylgruppen sind.

4. 1,2-RR¹-Cp- und 1,3-RR¹-Cp-Metallocene im Verhältnis 1 : 3 - 1 : 4, hergestellt gemäß Anspruch 3.

5. Verfahren gemäß den Ansprüchen 1 bis 3, dadurch gekennzeichnet, daß das Übergangsmetall Titan, Zirkonium oder Hafnium ist.

6. Verfahren gemäß den Ansprüchen 1 bis 3, dadurch gekennzeichnet, daß die disubstituierten Cyclopentadiene (CpRR') vor der weiteren Umsetzung aus der Reaktionsmischung isoliert werden.
